# EUROPÄISCHE PATENTSCHRIFT

(11) **EP 1 463 884 B1**
(45) Veröffentlichungstag und Bekanntmachung des Hinweises auf die Patenterteilung: **13.03.2013**
(21) Anmeldenummer: 03701468.5
(22) Anmeldetag: 02.01.2003
(51) Int. Cl.: F02M 37/22

(54) **KRAFTSTOFFFILTERELEMENT**
FUEL FILTER ELEMENT
ELEMENT DE FILTRAGE DE CARBURANT

(30) Priorität: 07.01.2002 DE 10200274
(43) Veröffentlichungstag der Anmeldung: 06.10.2004
(73) Patentinhaber: Continental Automotive GmbH, 30165 Hannover (DE)
(72) Erfinder: BUCHHAUSER, Wolfgang, 93356 Teugn (DE); EINBERGER, Adolf, 84326 Rimbach (DE); KLESSE, Christoph, 93086 Wörth a. d. Donau (DE)
(86) Internationale Anmeldenummer: PCT/DE2003/000006
(87) Internationale Veröffentlichungsnummer: WO 2003/058051

(56) Entgegenhaltungen:
- WO-A-00/09238
- DE-A- 19 809 989
- US-A- 5 785 078
- US-A- 6 090 283
- US-B1- 6 217 755

## Beschreibung

Die vorliegende Erfindung betrifft ein Filterelement zur Filterung von Kraftstoff, insbesondere Dieselkraftstoff, in einem Fahrzeug.

Derzeit werden bei mit Dieselkraftstoff betriebenen Fahrzeugen sogenannte Siebfilter eingesetzt, welche im Wesentlichen zylindrisch sind und wobei die Filterfunktion überwiegend am Mantelbereich des Filters ausgeführt wird. Derartige Siebfilter werden überwiegend zum Schutz eines Volumenstromregelventils verwendet, welche einen Volumenstrom von einer Niederdruckpumpe zu einer Hochdruckpumpe regelt. Da das Volumenstromregelventil aufgrund der sehr feinen Bauteiltoleranzen sehr empfindlich gegenüber Verunreinigungen ist, muss der Kraftstoff, bevor er in das Volumenstromregelventil eintritt, über das Siebfilter geleitet werden.

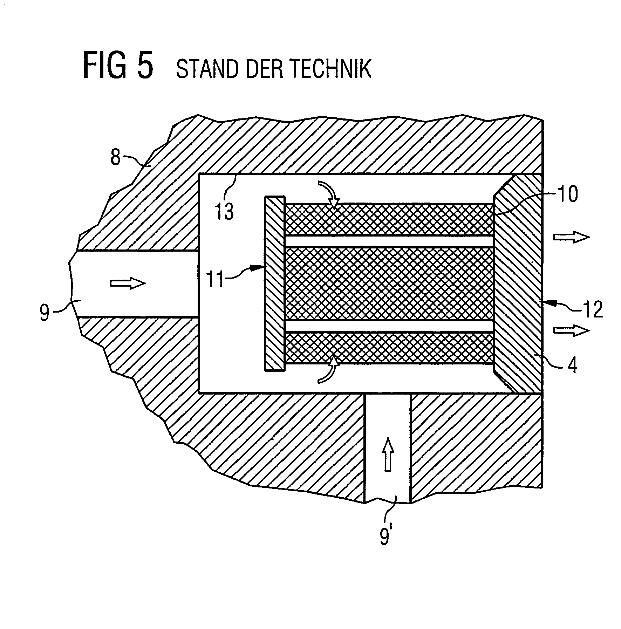

In Figur 5 ist ein zylinderförmiges Siebfilter 4 gemäß dem Stand der Technik dargestellt. Wie in Figur 5 gezeigt, ist das Siebfilter 4 in einer Aussparung 13 in einem Gehäuse 8 angeordnet. Eine Zuleitung 9 bzw. 9' kann dabei in Axialrichtung des Siebfilters 4 oder in Radialrichtung des Siebfilters 4 erfolgen. Die in Figur 5 eingezeichneten Pfeile stellen dabei die Strömungsrichtung des Kraftstoffs dar. Es sei angemerkt, dass die erste Stirnseite 11 des Siebfilters 4 verschlossen ist und die zweite Stirnseite 12 des Siebfilters offen ist.

Die Effektivität dieses Siebfilters 4 hängt entscheidend von der Filtermaschenweite ab. Eine sehr enge Filtermaschenweite ist jedoch problematisch, wenn bei kalten Außentemperaturen das Fahrzeug noch mit einem Kraftstoff betrieben, dessen CFPP-Wert (Grenze der Filtrierbarkeit) höher ist als die aktuelle Außentemperatur. Dies kann beispielsweise der Fall sein, wenn die Umstellung von Sommerdiesel auf Winterdiesel an den Tankstellen nicht rechtzeitig erfolgt ist, bzw. ein frühzeitiger Kälteeinbruch eintritt, oder wenn ein Fahrzeug, welches noch mit Sommerdiesel betankt ist, erst wieder bei kalten Außentemperaturen bewegt wird. In diesem Fall kommt es wegen des für tiefe Temperaturen nicht geeigneten Dieselkraftstoff zu Parafinausflockungen, welche in kürzester Zeit das Siebfilter verstopfen. Dadurch ist eine Versorgung des Pumpenhochdruckteils behindert. Die Hochdruckpumpe kann zwar den für einen Start des Fahrzeugs notwendigen Volumenstrom bereitstellen, so dass der Motor anspringt, jedoch stirbt der Motor nach wenigen Sekunden wieder ab, da das Filter zugesetzt ist und keine ausreichende Kraftstoffförderung erfolgt. Somit kann es durch das Zusetzen des Filterelements unmittelbar nach dem Start des Fahrzeugs wieder zum Absterben des Motors kommen. Das Fahrzeug kann dann erst wieder gestartet werden, wenn sich der Kraftstoff im Bereich des Siebfilters erwärmt hat und sich die Kraftstoffausflockungen aufgelöst haben.

Zwar wurde schon vorgeschlagen, eine elektrische Heizung im Bereich des im Pumpenzulauf angeordneten Kraftstoff-Filters vorzusehen, jedoch reicht dies nicht aus, um in der kurzen Zeit den Kraftstoff so zu erwärmen, dass die Parafinausscheidungen am Siebfilter vor dem Volumenstromregelventil aufgelöst werden. Weiterhin ist eine derartige Heizung relativ aufwendig und kostenintensiv.

Die US 6, 217, 755 B1 offenbart einen Fluidfilter mit einem Bypass gemäß dem Oberbegriff des Anspruchs 1.

Aus der US 6,090,283 ist ein Fluidfilter mit einem Filtereinsatz und einer Entleerungsöffnung bekannt, wobei die Entleerungsöffnung mit einem Federelement ständig abgedeckt ist. Dabei ist das Federelement als Blattfeder ausgebildet, um Längenänderungen des Filterelements auszugleichen, ohne dass die Öffnung freigegeben wird.

Aus der US 5,785,078 ist ein Sicherheitsventil für einen Einsenbahntankwagen bekannt, in welchem ein Überdruckschutz am oberen Bereich des Tankwagens angeordnet ist.

Es ist von daher Aufgabe der vorliegenden Erfindung, ein Filterelement zur Filterung von Kraftstoff bereitzustellen, welches auch bei Zusetzen des Filterelements infolge von temperaturbedingten Ausflockungen von Bestandteilen des Kraftstoffs ein Durchströmen des Filterelements ermöglicht.

Dies Aufgabe wird durch ein Filterelement mit den Merkmalen des Patentanspruchs 1 gelöst. Die Unteransprüche zeigen vorteilhafte Ausbildungen der Erfindung.

Das erfindungsgemäße Filterelement zur Filterung von Kraftstoff in einem Fahrzeug hat gegenüber dem Stand der Technik den Vorteil, dass es einen Bypass aufweist, welcher bei einem vorbestimmten Differenzdruck zwischen einem Bereich vor dem Filterelement und einem Bereich nach dem Filterelement öffnet. Dadurch kann bei Zusetzen des Filterelements Kraftstoff über den Bypass unter Umgehung des Filterelements strömen. Somit kann insbesondere ein Dieselfahrzeug bei kalten Außentemperaturen noch mit einem Kraftstoff betrieben werden, dessen CFPP-Wert höher ist als die aktuelle Außentemperatur. Wenn dann nach kurzer Zeit die Temperatur des Kraftstoffs ansteigt und die kältebedingten Ausflockungen wieder im Kraftstoff gelöst werden, ist das Filterelement wieder frei, so dass der Kraftstoff wieder durch das Filterelement strömen kann. Erfindungsgemäß kann dabei für das Filterelement eine sehr kleine Maschengröße von z.B.ca. 30 µm verwendet werden und das Filterelement garantiert trotzdem auch bei eventuellen Parafinablagerungen am Filterelement eine Durchlassfunktion. Erfindungsgemäß wird hierzu die infolge des Zusetzens des Filterelements ansteigende Druckdifferenz nutzbar gemacht. Wenn der definierte Differenzdruck über dem Filterelement überschritten wird, wird der Bypass geöffnet und stellt somit die Funktion des Filterelements sicher. Somit kann erfindungsgemäß weiterhin eine sehr enge Maschenweite für das Filterelement verwendet werden. Um einen besonders kompakten Aufbau bereitzustellen, ist der Bypass integral im Filterelement gebildet. Hierbei kann das Filterelement beispielsweise als zylinderförmiges Siebfilter ausgebildet sein, wobei der Bypass an einer Stirnseite des zylinderförmigen Siebfilters angeordnet ist.

Um zu verhindern, dass nach einmaligem Öffnen des Bypasses dieser dauernd offen steht, ist vorzugsweise eine automatische Rückstellung zum Wiederverschließen des Bypasses vorgesehen. Vorzugsweise erfolgt diese Rückstellung mittels eines elastischen Elements.

Erfindungsgemäß ist das Verschlusselement als Sollbruchstelle in einer Wand des Filterelements vorgesehen. Bei einer vorbestimmten Druckdifferenz zwischen dem Bereich vor dem Filter und dem Bereich nach dem Filter bricht die Sollbruchstelle, so dass der Bypass geöffnet ist und Kraftstoff an den Filtereinrichtungen des Filterelements vorbeiströmen kann. Dabei ist das Material, an dem die Sollbruchstelle ausgebildet ist, derart flexibel, dass nach Auflösen der verstopfenden Ausflockungen bei einer Verringerung der Druckdifferenz zwischen den Bereichen vor und hinter dem Filterelement die Sollbruchstelle durch ihre elastische Rückstellkraft wieder verschlossen wird. Allerdings ist anzumerken, dass hierbei häufig ein kleiner Spalt bzw. kleine Durchlässe offen bleiben. Von daher ist vorzugsweise an der Sollbruchstelle noch eine gummiartige Lippe vorgesehen, um die gebrochene Sollbruchstelle abzudecken. Vorzugsweise ist das Material, an welchem die Sollbruchstelle ausgebildet ist, ein Kunststoff.

Besonders bevorzugt ist das Filterelement als ein zylindrisches Siebfilter ausgebildet, wobei der Bypass mit dem Verschlusselement vorzugsweise an einer Stirnseite des Siebfilters angeordnet ist.

Somit kann erfindungsgemäß ein Filterelement mit einer gestuften Wirkung beim Zusetzen des Filters infolge von temperaturbedingten Ausflockungen von Parafinen im Kraftstoff bereitgestellt werden. Da eine derartige Konstellation im Lebenszyklus eines Fahrzeugs üblicherweise nur äußerst selten vorkommt, muss der erfindungsgemäße Bypass mit Verschlusselement nicht für einen häufigen Gebrauch ausgelegt werden. Daher kann er besonders kostengünstig bereitgestellt werden. Somit kann erfindungsgemäß die Kaltstartfähigkeit eines Fahrzeugs, welches insbesondere mit Sommerdiesel bei kalten Außentemperaturen fahren soll, erheblich verbessert werden. Durch die vorliegende Erfindung ist man nicht mehr auf die exakte Dieselkraftstoffqualität angewiesen. Weiterhin erlaubt die vorliegende Erfindung die Wahl einer sehr kleinen Maschenweite für das Filterelement, da die Größe der Maschenweite nicht von der Kaltstartfähigkeit des Fahrzeugs beeinflusst ist.

Nachfolgend wird die vorliegende Erfindung anhand von bevorzugten Ausführungsbeispielen in Verbindung mit der Zeichnung beschrieben. In der Zeichnung ist:
- Figur 1: eine schematische Schnittansicht eines Teils einer Kraftstofffördereinheit für ein Fahrzeug mit einem bekannten Filterelement,
- Figur 2: eine vergrößerte Seitenansicht des in Figur 1 dargestellten Filterelements,
- Figur 3: eine vergrößerte Seitenansicht eines anderen Filterelements,
- Figuren 4a bis 4c: Ansichten eines Filterelements gemäß einem Ausführungsbeispiel der vorliegenden Erfindung, und
- Figur 5: eine Seitenansicht eines Filterelement gemäß dem Stand der Technik.

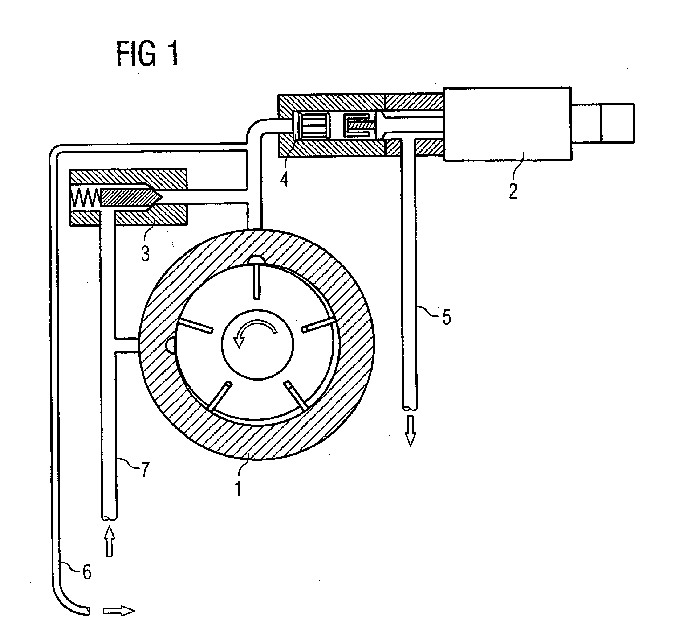

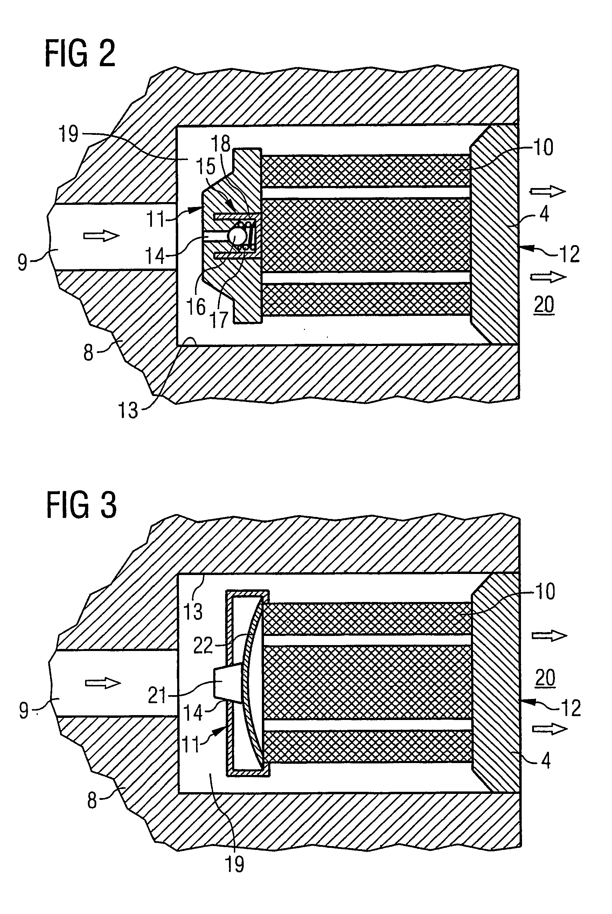

Nachfolgend wird unter Bezugnahme auf die Figuren 1 und 2 ein Filterelement 4 beschrieben.

Wie in Figur 2 gezeigt, ist das Filterelement 4 als zylinderförmiges Siebfilter ausgebildet, welches einen Filtereinsatz 10 mit einer engen Maschenweite aufweist, der als Mantel des Siebfilters 4 ausgebildet ist und eine erste Stirnseite 11 und eine zweite Stirnseite 12 aufweist.

In Figur 1 ist ein Funktionsschema einer selbstansaugenden Kraftstoffhochdruckpumpe mit einem Siebfilter 4 dargestellt. Aus Vereinfachungsgründen ist in Figur 1 nur der Niederdruckbereich dieser Pumpe dargestellt.

Der Kraftstoff wird von einer internen mechanischen Vorförderpumpe 1 über den Pumpenzulauf 7 angesaugt und auf ein höheres Druckniveau gebracht. Ein Teil des geförderten Kraftstoffes fließt durch das zylinderförmige Siebfilter 4 zum Volumenstromregelventil 2. Dieses Volumenstromregelventil 2 bemisst die Menge von Kraftstoff, welche über die Leitung 5 zum Hochdruckteil der Pumpe (nicht gezeigt) gelangen soll. Ein anderer Teil des geförderten Kraftstoffs wird in eine Leitung 6 für eine Spülung der Hochdruckpumpe gefördert. Der Druck nach der Vorförderpumpe 1 wird über ein internes Druckregelventil 3 geregelt. Die Abregelmenge am Druckregelventil 3 wird zur Saugseite der Vorförderpumpe 1 geleitet.

Da das Volumenstromregelventil 2 aufgrund seiner sehr engen Bauteiltoleranzen sehr empfindlich gegenüber Verunreinigungen ist, wird der Kraftstoff mittels des Siebfilters 4 gefiltert, bevor er in das Volumenstromregelventil 2 eintritt. Dabei hängt die Effektivität des Siebfilters 4 entscheidend von der Filtermaschenweite ab. In Figur 2 ist das zylinderförmige Siebfilter 4 näher dargestellt. Wie in Figur 2 gezeigt, besteht das zylinderförmige Siebfilter 4 aus einem Filtereinsatz 10 mit einer engen Maschenweite, welcher den Mantel des Siebfilters 4 bereitstellt. Weiterhin umfasst das Siebfilter 4 eine erste Stirnseite 11 und eine zweite Stirnseite 12. Die zweite Stirnseite 12 weist eine Öffnung auf und das Volumenstromregelventil 2 ist an dieser Seite des Siebfilters 4 angeordnet (vgl. Figur 1). Die erste Stirnseite 11 stellt den Boden des Siebfilters 4 dar und weist einen Bypass 14 mit einem Verschlusselement 15 auf. Das Verschlusselement 15 verschließt den im Boden des Siebfilters gebildeten Bypass 14. Das Verschlusselement 15 besteht aus einer Ventilkugel 16, einer Spiralfeder 17 sowie einem Federsitz 18. Die Ventilkugel 16 wird dabei durch die Feder 17 auf ihren Ventilsitz gedrückt (vgl. Figur 2). Das Siebfilter 4 gemäß dem ersten Ausführungsbeispiel ist dabei in einer Aussparung 13 in einem Gehäuse 8 angeordnet. Wie in Figur 2 gezeigt, wird das Siebfilter 14 dabei in Axialrichtung über eine Filterzuleitung 9 angeströmt. Es sei angemerkt, dass das Siebfilter 4 selbstverständlich auch radial angeströmt werden könnte.

Die Funktion des Siebfilters 4 gemäß dem ersten Ausführungsbeispiel bei einem Kaltstart eines Fahrzeugs mit einem Kraftstoff, dessen CFPP-Wert höher als die aktuelle Außentemperatur ist, verläuft dabei wie folgt. Wenn der Motor angelassen wird, kann über einen kurzen Zeitraum Kraftstoff aus dem dem Siebfilter nachgeschalteten Bereich der Pumpe gefördert werden. Da die aktuelle Außentemperatur jedoch geringer als die CFPP-Grenze ist, sind im Kraftstoff Parafinausflockungen vorhanden, welche in kürzester Zeit den Filtereinsatz 10 zusetzen. Dadurch würde im Stand der Technik eine Kraftstoffzufuhr zur Hochdruckpumpe unterbrochen werden und der Motor würde absterben.

Erfindungsgemäß erzeugt jedoch die Zusetzung des Filtereinsatzes 10 eine Druckdifferenz Δp zwischen einem Bereich 19 vor dem Siebfilter 4 und einem Bereich 20 nach dem Siebfilter 4.

Wenn diese Druckdifferenz Δp einen vorbestimmten Wert übersteigt, öffnet das Verschlusselement 15 indem die Ventilkugel 16 gegen die Federkraft der Feder 17 von ihrem Sitz abgehoben wird. Somit ist der Bereich 19 vor dem Siebfilter 4 mit dem Bereich 20 nach dem Siebfilter 4 über den Bypass 14 verbunden. Somit kann Kraftstoff aus der Filterzuleitung 9 direkt über den Bypass 14 und das offene Verschlusselement 15 zur Hochdruckpumpe strömen.

Es sei angemerkt, dass der Durchmesser des Bypasses 14 dabei so groß bemessen sein muss, dass die im Kraftstoff vorhandenen Parafinausflockungen hindurchgehen können. Weiterhin sei angemerkt, dass in diesem Fall, d.h. bei geöffnetem Verschlusselement 15, keine Filterung von Kraftstoff erfolgt und der Kraftstoff somit ungefiltert zur Hochdruckpumpe gefördert wird. Dies ist jedoch hinnehmbar, da der Zustand, in welchem die Parafinausflockungen im Kraftstoff enthalten sind, während eines Lebenszyklus der Motoreinheit bzw. der Pumpeneinheit nur äußerst selten auftritt (beispielsweise bei nicht rechtzeitiger Umstellung von Sommer- auf Winterdiesel an den Tankstellen oder wenn ein mit Sommerdiesel betanktes Fahrzeug erst wieder bei kalten Außentemperaturen bewegt wird).

Sobald der Kraftstoff durch den Betrieb des Motors erwärmt wird, werden die Parafinausscheidungen wieder in Kraftstoff gelöst, so dass der Filtereinsatz 10 nicht mehr durch die Parafinausflockungen zugesetzt ist, so dass der Kraftstoff wieder durch den Filtereinsatz 10 strömen kann. Dadurch steigt der Druck im Bereich 20 hinter dem Siebfilter 4 wieder an, so dass die Druckdifferenz Δp sich wieder verringert und das Verschlusselement 15 mittels der Feder 17 wieder verschlossen wird. Dadurch ist der Bypass 14 wieder verschlossen und der Kraftstoff kann nur noch über den Filtereinsatz 10 des Siebfilters 4 gefiltert strömen.

Abhängig von der Federkraft der Feder 17 kann der Zeitpunkt des Öffnens bzw. des Verschließens des Bypasses 14 dabei beliebig eingestellt werden.

Es sei angemerkt, dass der Bypass 14 entweder integral im Filterelement 4 gebildet sein kann oder auch benachbart am Filterelement gebildet sein kann.

Nachfolgend wird unter Bezugnahme auf Figur 3 ein anderes Filterelement beschrieben. Gleiche bzw. funktional gleiche Teile sind dabei wieder mit den gleichen Bezugszeichen wie in Figur 2 bezeichnet.

Das in Figur 3 gezeigte Filterelement entspricht im Wesentlichen dem in Figur 2 gezeigten Filterelement. Im Unterschied dazu ist jedoch der Bypass durch eine Öffnung 14 an der ersten Stirnseite 11 des Siebfilters 4 gebildet. Die Öffnung 14 wird von einem konischen Verschlusselement 15 verschlossen, welches mittels eines Federblechs 22 die Öffnung 14 verschließt. Ansonsten entspricht der Aufbau im Wesentlichen dem in Figur 2 gezeigten Filterelment, so dass eine weitergehende Beschreibung des Aufbaus dieses Filterelements nicht notwendig ist.

Auch die Funktion des Siebfilters 4 gemäß Figur 3 ist zur Funktion des Filterelements gemäß Figur 2 ähnlich. Bei einem Zusetzen des Filtereinsatzes 10 führt die dadurch hervorgerufene Druckdifferenz zwischen dem Bereich 19 vor dem Filter und dem Bereich 20 nach dem Filter zum Öffnen des Bypasses 14. Entgegen der Federkraft des Federblechs 22 wird das konische Verschlusselement 21 aufgrund der Druckdifferenz aus seinem Sitz gedrückt und somit eine direkte Strömung vom Bereich 19 zum Bereich 20 ermöglicht. Nach Auflösen der den Filtereinsatz 10 verstopfenden Ausflockungen und Absinken der Druckdifferenz zwischen den Bereichen vor und nach dem Filter stellt sich das Verschlusselement 21 wieder selbsttätig aufgrund der Federkraft des Federblechs 22 zurück und verschließt den Bypass 14. Somit kann Kraftstoff nur noch durch den Filtereinsatz 10 gefiltert zur Hochdruckpumpe geliefert werden.

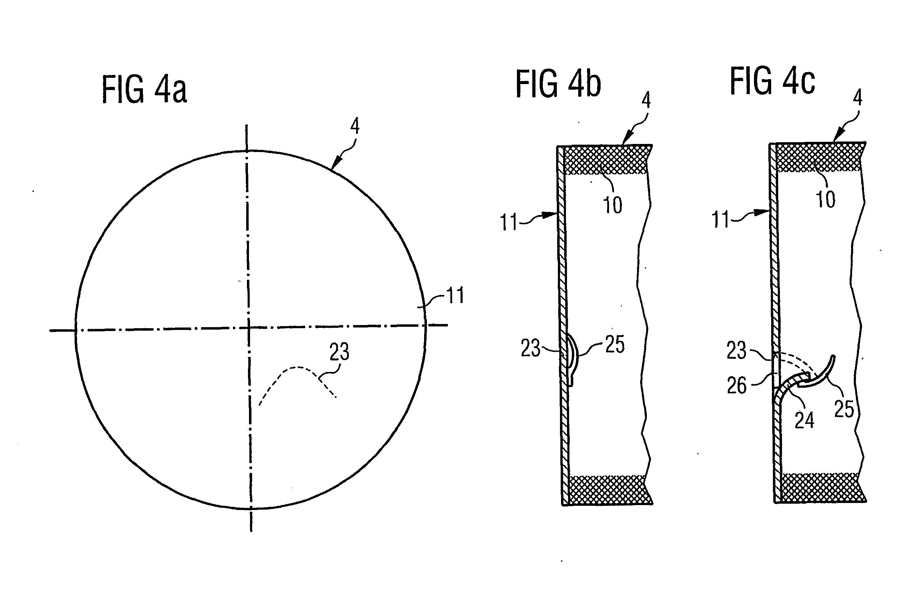

Nachfolgend wird unter Bezugnahme auf die Figuren 4a, 4b und 4c ein Filterelement gemäß einem Ausführungsbeispiel der vorliegenden Erfindung beschrieben. Gleiche bzw. funktional gleiche Teile sind dabei wiederum mit den gleichen Bezugszeichen wie in den vorhergehenden Figuren bezeichnet.

Im Gegensatz zu den vorhergehenden Beispielen weist das Filterelement gemäß der Erfindung eine Sollbruchstelle 23 auf. Weiterhin ist im Inneren des Siebfilters 4 eine Dichtlippe 25 vorgesehen, welche aus einem gummielastischen Material hergestellt ist und über der Sollbruchstelle 23 liegt und diese abdichtet.

In Figur 4a ist das Siebfilter 4 in Draufsicht auf die erste Stirnseite 11 dargestellt. Hierbei ist die Sollbruchstelle 23 bogenförmig an einem beliebigen Bereich der ersten Stirnseite 11 gebildet. Wenn nun aufgrund von temperaturbedingten Ausflockungen der Filtereinsatz 10 zugesetzt wird und eine definierte Druckdifferenz zwischen den Bereichen vor und nach dem Siebfilter 4 überschritten wird, bricht die Sollbruchstelle 23 auf, wie in Figur 4c gezeigt. Dadurch kann der Kraftstoff durch die so gebildete Öffnung 26 ohne Filterung durch das Siebfilter 4 zur Hochdruckpumpe strömen.

Wenn die Temperatur des Kraftstoffs ansteigt und die Ausflockungen wieder im Kraftstoff gelöst werden, verringert sich die Druckdifferenz zwischen den Bereichen vor und nach dem Siebfilter 4, so dass der an der Sollbruchstelle 23 umgebogene Abschnitt 24 aufgrund seiner Eigenelastizität wieder in seine Ausgangsstellung zurückgestellt wird. Da die Sollbruchstelle 23 jedoch einmal aufgebrochen wurde, verbleibt ein geringer Spalt in der ersten Stirnseite 11. Hierzu ist jedoch jetzt die Dichtlippe 25 vorgesehen, um diesen Spalt abzudecken. Somit wird verhindert, dass durch den an der Sollbruchstelle entstehenden Spalt Verunreinigungen in den Bereich hinter das Siebfilter 4 hindurchtreten können. Es sei angemerkt, dass die erste Stirnseite 11 vorzugsweise aus Kunststoff hergestellt ist, so dass die Eigenelastizität des umgebogenen Abschnitts 24 auf einfache Weise bereitgestellt werden kann. Weiterhin sei angemerkt, dass die Sollbruchstelle geometrisch beliebig geformt sein kann. Es ist nur sicherzustellen, dass nach dem Brechen der Sollbruchstelle eine ausreichende Rückstellkraft durch den umgebogenen Abschnitt bereitgestellt wird. Daher wird der die Sollbruchstelle aufweisende Bereich des Filters vorzugsweise aus Kunststoff hergestellt.

Somit wird erfindungsgemäß die Kaltstartfähigkeit des Fahrzeugs in erheblicher Weise verbessert, wobei man nicht mehr auf die exakte Dieselkraftstoffqualität angewiesen ist. Weiterhin kann erfindungsgemäß vermieden werden, dass eine zu große Maschenweite für den Filtereinsatz 10 verwendet wird, was jedoch im Stand der Technik zur Vermeidung des Zusetzens des Filtereinsatzes 10 verwendet wird. Somit kann das erfindungsgemäße Filterelement neben der verbesserten Kaltstartfähigkeit auch eine deutlich verbesserte Filterwirkung ermöglichen. Beispielsweise kann für das erfindungsgemäße Filterelement eine Maschenweite von 30 µm verwendet werden.

Somit betrifft die vorliegende Erfindung ein Filterelement zur Filterung von Kraftstoff, insbesondere Dieselkraftstoff, in einem Fahrzeug. Das Filterelement weist einen Bypass 14, 26 mit einem Verschlusselement 15, 21, 24 auf, welches bei einem vorbestimmten Differenzdruck Δp zwischen einem Bereich 19 vor dem Filterelement und einem Bereich 20 nach dem Filterelement öffnet.

## Patentansprüche

1. Filterelement zur Filterung von Kraftstoff in einem Fahrzeug, umfassend einen Bypass (14; 26) mit einem Verschlusselement (15; 21; 24), welches bei einem vorbestimmten Differenzdruck zwischen einem Bereich (19) vor dem Filterelement (4) und einem Bereich (20) nach dem Filterelement (4) öffnet, wobei der Bypass (14; 26) im Filterelement (4) integral gebildet ist, **dadurch gekennzeichnet, dass** das Verschlusselement als Sollbruchstelle (23) ausgebildet ist.

2. Filterelement nach einem der vorhergehenden Ansprüche, **dadurch gekennzeichnet, dass** das Verschlusselement (15; 21; 24) eine automatische Rückstellung aufweist.

3. Filterelement nach Anspruch 1 oder 2, **dadurch gekennzeichnet, dass** die Sollbruchstelle an der der Strömungsrichtung abgewandten Seite eine Dichtlippe aufweist.

4. Filterelement nach einem der vorhergehenden Ansprüche, **dadurch gekennzeichnet, dass** die Sollbruchstelle an einem aus Kunststoff hergestellten Bereich des Filterelements ausgebildet ist.

5. Filterelement nach einem der vorhergehenden Ansprüche, **dadurch gekennzeichnet, dass** das Filterelement als zylindrisches Siebfilter (4) ausgebildet ist.

6. Filterelement nach Anspruch 5, **dadurch gekennzeichnet , dass** der Bypass (14) mit dem Verschlusselement an einer ersten Stirnseite (11) des zylindrischen Siebfilters (4) ausgebildet ist.

## Claims

1. Filter element for filtering fuel in a motor vehicle, including a bypass (14; 26) with a sealing element (15; 21; 24), which opens when a predefined pressure difference is reached between a region (19) before the filter element (4) and a region (20) after the filter element (4), whereby the bypass (14; 26) is an integral part of the filter element (4), **characterised in that** the sealing element is configured as a pressure-relief joint (23).

2. Filter element according to one of the preceding claims, **characterised in that** the sealing element (15; 21; 24) has an automatic reset.

3. Filter element according to claim 1 or 2, **characterised in that** the pressure-relief joint comprises a sealing lip on the side opposite the direction of flow.

4. Filter element according to one of the preceding claims, **characterised in that** the pressure-relief joint is configured on a region of the filter element made from plastic.

5. Filter element according to one of the preceding claims, **characterised in that** the filter element is configured as a cylindrical mesh filter (4).

6. Filter element according to claim 5, **characterised in that** the bypass (14) with the sealing element is configured on a first face (11) of the cylindrical mesh filter (4).

## Revendications

1. Élément de filtrage pour filtrer le carburant dans un véhicule, comportant une dérivation (14 ; 26) avec un élément de fermeture (15 ; 21 ; 24) qui, lors d'une pression différentielle prédéfinie entre une zone (19) avant l'élément de filtrage (4) et une zone (20) après l'élément de filtrage (4), ouvre, dans lequel la dérivation (14 ; 26) est intégralement formée dans l'élément de filtrage (4), **caractérisé en ce que** l'élément de fermeture est réalisé sous la forme d'un point de rupture (23).

2. Élément de filtrage selon l'une des revendications précédentes, **caractérisé en ce que** l'élément de fermeture (15 ; 21 ; 24) présente une position de rappel automatique.

3. Élément de filtrage selon la revendication 1 ou 2, **caractérisé en ce que** le point de rupture présente une lèvre d'étanchéité au niveau du côté opposé à la direction du flux.

4. Élément de filtrage selon l'une quelconque des revendications précédentes, **caractérisé en ce que** le point de rupture est réalisé dans une zone en matière plastique de l'élément de filtrage.

5. Élément de filtrage selon l'une quelconque des revendications précédentes, **caractérisé en ce que** l'élément de filtrage est réalisé sous la forme d'un filtre tamis (4) cylindrique.

6. Élément de filtrage selon la revendication 5, **caractérisé en ce que** la dérivation (14) avec l'élément de fermeture est réalisée sur un premier côté frontal (11) du filtre tamis (4) cylindrique.
